# EUROPEAN PATENT SPECIFICATION

(11) **EP 3 666 638 B1**
(45) Date of publication and mention of the grant of the patent: **24.11.2021**
(21) Application number: 19213530.9
(22) Date of filing: 04.12.2019
(51) Int. Cl.: B63C 9/19, B64D 11/00

(54) **CONNECTING DEVICE FOR CONNECTING A COMPRESSED GAS CYLINDER TO AN INFLATABLE DEVICE**
VERBINDUNGSVORRICHTUNG ZUR VERBINDUNG EINES DRUCKGASZYLINDER MIT EINER AUFBLASBAREN VORRICHTUNG
DISPOSITIF DE CONNEXION D'UN CYLINDRE DE GAZ COMPRIMÉ SUR UN DISPOSITIF GONFLABLE

(30) Priority: 14.12.2018 NO 20181620
(43) Date of publication of application: 17.06.2020
(73) Proprietor: Safe Inflator AS, 4632 Kristiansand (NO)
(72) Inventor: Nordmo, Jon, 4631 Kristiansand (NO)
(74) Representative: Håmsø Patentbyrå AS

(56) References cited:
- WO-A1-2010/121078
- DE-A1-102016 205 656
- US-A- 3 809 288
- US-A- 6 089 403

## Description

This invention concerns a connecting device for connecting a compressed gas cylinder to an inflatable device via a releaser.

A passenger aircraft is, as a standard, provided with a life vest for each passenger. These life vests are placed under each passenger's seat. Each life vest is provided with at least one gas cylinder. The life vest is inflated with gas from the gas cylinder by pulling a releasing cord. The releasing cord activates a releaser that is provided with means for puncturing the gas cylinder. The releaser forms a channel from the gas cylinder to the interior of the inflatable vest.

Airport authorities and airlines spend substantial efforts on security checks of passengers prior to boarding an aircraft. Liquids are only allowed in small quantities. The passengers are not allowed to bring with them weapons or potential weapons such as pointed items.

It is known that compressed gas may be used as a propellant in weapons, such as an air gun. Primitive air gun like weapons may be constructed where a known gas cylinder is used as source for compressed air. Such primitive weapons may be assembled on board an airplane from parts that by themselves do not look like a weapon. The gas cylinder in a life vest may complete the weapon.

DE102016205656A1 discloses a piercing unit for piercing a closed pressure medium reservoir.

The invention has for its object to further increase safety on board an airplane by eliminating the risk that the gas cylinders are used as part of a weapon.

The object is achieved through features, which are specified in the description below and in the claims that follow.

The invention relates more particularly to a connection device for connecting a compressed gas cylinder to an inflatable device according to claim 1.

The first direction may for example be clockwise and the second direction anticlockwise.

The connection between the releaser and the outer sleeve and between the inner sleeve and the compressed gas cylinder comprises complementary screw threads. The screw threads may have so large a pitch that less than one rotation is required for connection. The connection between the outer sleeve and the inner sleeve comprises screw threads.

The inner sleeve may be configured such that an axial displacement of the compressed gas cylinder further into the inner sleeve is not possible after the compressed gas cylinder has been fastened into the inner sleeve. For example, it may be caused by using a strong thread-locker on threads, by the inner sleeve having an end cap which prevents further axial displacement. Using similar means, the connection device may be configured such that an axial displacement of the outer sleeve further into the releaser is not possible after the outer sleeve has been fastened into the releaser. The connection between the inner and outer sleeve may be configured such that an axial displacement of the inner sleeve in a first direction into the outer sleeve is not possible after the inner sleeve has been fastened into the outer sleeve, for example by using a cap on the inner sleeve. Using thread-locker is not suitable for this connection as the inner sleeve in operation should be able to be displaced axially in a second direction opposite out from the outer sleeve and towards the bunching dart.

The connections between the releaser and the outer sleeve, and between the inner sleeve and the compressed gas cylinder may be configured to require more torque for turning of the outer sleeve relative to the releaser, and the compressed gas cylinder relative to the inner sleeve, than for turning of the inner sleeve relative to the outer sleeve. This will have the effect that turning of the compressed gas cylinder in the second direction will not loosen the compressed gas cylinder, but only screw the compressed gas cylinder and the inner sleeve further towards the bunching dart.

One way to obtain this effect may be to have thread-locker on the connections between the compressed gas cylinder and the inner sleeve, and between the outer sleeve and the body of the connection device.

Alternatively, as the connections comprise screw threads, then the screw thread between the inner and outer sleeve may have a larger pitch than between the outer sleeve and the body of the connection device. Thus, even if the torque required for turning is the same, a certain rotation of the compressed gas cylinder relative to the connection device will result in an axial displacement of the compressed gas cylinder towards the bunching dart.

An attempt to turn the compressed gas cylinder in the first direction relative to the releaser will thus not be possible or will fasten the compressed gas cylinder further. On the other hand, turning of the compressed gas cylinder in the second direction relative to the releaser will result in an axial displacement of the compressed gas cylinder towards the bunching dart, whereby the bunching dart will puncture the compressed gas cylinder. It will therefore be immediately evident if any unauthorised removal of the compressed gas cylinder is attempted. The connection device may be configured such that further turning of the compressed gas cylinder in the second direction relative to the releaser after puncture may result in the compressed gas cylinder, and possible also the inner and outer sleeves, being loosened form the releaser. For example, if the compressed gas cylinder and the inner sleeve meets the releaser such that further axial displacement is prevented, enough torque may be applied to loosen the connection between the outer sleeve and the releaser, or alternatively between the inner sleeve and the compressed gas cylinder.

The connection device may comprise an attachment device for fastening the releaser to the inflatable device, wherein the attachment device may be connected to the inflatable device via a screw type coupling up, said coupling up may comprise a spring hinged catch lever provided with a first lock surface and a number of rachets, and each of the rachets may be provided with a second lock surface, said second lock surface may be adapted for engagement with the first lock surface, and the spring hinged catch lever may be provided with a compression surface which may be adapted to engage with a tapered tip of a tool such that the first lock surface may be released from the second lock surface.

A connection device as described above will make an inflatable device filled with compressed gas upon an attempt of unauthorized separation of the compressed gas cylinder from the releaser. This will be easily recognizable. As an alternative, a tamper-proof connection between the compressed gas cylinder and the inflatable device may be achieved by applying locking means to the connections such that the compressed gas cylinder will be irreversibly fastened to the releaser. The locking means may for example be a glue in the form of a thread locker. However, if the releaser is also irreversible fastened to the inflatable device, for example through welding, this will make the compressed gas cylinder irreversible fastened to the inflatable device via the releaser even for authorized personnel. Service and maintenance of the inflatable device, releaser and compressed gas cylinder will thereby not be possible. To overcome this problem, the compressed gas cylinder may be irreversible fastened to the releaser, but the releaser may be releasable connected to the inflatable device via a coupling up. The coupling up may be a bayonet lock or a threaded coupling up type. The inflatable device may be provided with a male portion with an external thread and the releaser may be provided with a female portion with an internal thread. It is also possible that the releaser may be provided with a male portion with an external thread and the inflatable device may be provided with a female portion with an internal thread. The internal thread mates with the external threads. Thereby the releaser comprising the compressed gas cylinder is releasable from the inflatable device. A through hole in the inflatable device is aligned with a corresponding through hole in the releaser. The coupling up is made tamperproof by a locking means that allows the releaser to be screwed onto the inflatable device in one rotational direction, but the locking means block for unscrewing the releaser in the opposite direction. The coupling up is further provided with means for operating the locking means between a blocking position and a disengaged position. The means may be a key hole with an irregular profile, and authorized personnel may use a specially designed release tool that fits complementary to the key hole to disengage the locking means. The locking means may comprise a spring hinged catch lever provided with a first lock surface. The locking means may further comprise a number of rachets, each rachet is provided with a second lock surface. When the releaser is screwed onto the inflatable device, the rachets slide freely over the catch lever. When the releaser is screwed in the opposite direction, the first lock surface and the second lock surface abut and block for unscrewing. The release tool moves the catch lever away from the rachets and unscrewing is thereby possible.

When the inflatable device comprises the male portion, the key hole may be positioned in the wall of an outer cylindrical protrusion that surrounds the through hole in the inflatable device. The release tool may on operation be displaced radially through the key hole and may press the catch lever towards the inflatable device. When the releaser comprises the male portion, the key hole may be positioned in the wall of an outer cylindrical protrusion that surrounds the through hole in the releaser. The release tool may on operation be displaced radially through the key hole and may press the catch lever towards the releaser.

In the following is described examples of preferred embodiments illustrated in the accompanying drawings, wherein:
- Fig. 1: shows in front view a compressed gas cylinder and a connection device for connecting the compressed gas cylinder to an inflatable device by an attachment device;
- Fig. 2: shows in a larger scale a cross-sectioned view the releaser from the connection device as shown in figure 1;
- Fig. 3: shows in perspective view (left) and cross-sectioned view (right) individual parts of the connection device and the compressed gas cylinder;
- Fig. 4: shows a cross-sectioned view of the connection device from figures 1-3 attached to the compressed gas cylinder;
- Fig. 5A-C: show in a different scale the releaser fastened to the inflatable device via a coupling up;
- Fig. 6: shows a flange connection of the coupling up and a release tool;
- Fig. 7: shows the same as figure 6 where the release tool is positioned in a key hole;
- Fig. 8: shows a connection face of the releaser; and
- Fig. 9: shows in a larger scale a locking mechanism comprising a catch lever and a number of rachets that allow turning the releaser in one direction around a threaded connection and block the releaser from being turned in the opposite direction.

In the drawings, the reference numeral 1 indicates a connection device according to the invention. Identical reference numerals indicate identical or similar features in the drawings. The drawings are presented in a simplified and schematic manner, and the features therein are not necessarily drawn to scale.

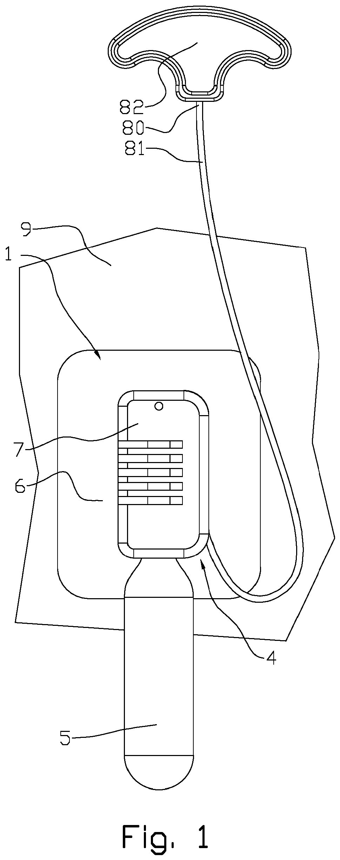

Figure 1 shows a connection device 1 comprising a releaser 4 with an attached compressed gas cylinder 5. The releaser 4 is fastened to an inflatable device 9 by an attachment device 6. The releaser 4 comprises a house 7 connected to the attachment device 6. The attachment device 6 and the house 7 may be formed in one material piece as shown in figure 1, for example by welding the house 7 onto attachment device 6. The releaser 4 further comprises an activation mechanism for controlled release of compressed gas from the compressed gas cylinder 5 to the inflatable device 9 through the releaser 4. The activation mechanism is *per se* a known activation mechanism and comprises a releasing cord 81, which at its free end 80 is provided with a handle 82. Pulling of the releasing cord 81 results in triggering of the activation mechanism in the releaser 4 and controlled release of the compressed gas from the compressed gas cylinder 5 into the inflatable device 9 through the releaser 4.

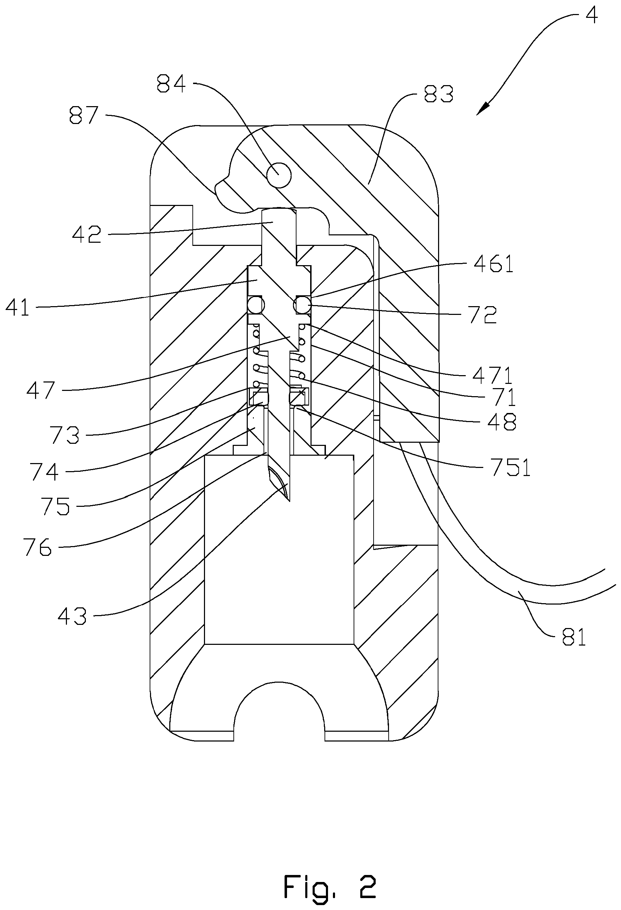

Figure 2 shows in a larger scale a cross-sectioned view of the releaser 4. The activation mechanism comprises a trigger 83 which pivots around a trigger axis 84. In the figures the trigger 83 is shown as an L-shaped arm where the releasing cord 81 is fastened to the long portion of the L-shaped arm and the trigger axis 84 is provided in the short portion of the L-shaped arm. The short portion of the L-shaped arm is provided with a cam lobe 87. Upon activation, *i.e.* by pulling the releasing cord 81, the trigger 83 pivots and causes the cam lobe 87 to axially displace a piston 41.

The piston 41 comprises a terminal engagement head 42 at a first end and a bunching dart 43 at the opposite end. The house 7 is formed with a central piston channel 71 and the piston 41 is axially displaceable in the piston channel 71. A circumferential groove 461 is formed in the piston 41. The groove 461 houses a sealing element 72, such as an O-ring. The sealing element 72 is in engagement with the piston channel 71.

A radially reduced portion 47 of the piston 41 forms a surface 471 facing the bunching dart 43, which protrudes from the radially reduced portion 47. The diameter of the bunching dart 43 is less than the diameter of the radially reduced portion 47. A displaceable seal holder 73 houses a sliding seal 74. The seal holder 73 is provided with a hole and is axially displaceable along the bunching dart 43. The seal holder 73 is closed towards the engagement head 42 and open towards the bunching dart 43. The sliding seal 74 seals towards the bunching dart 43. A compression coil spring 48 is positioned between the surface 471 and the seal holder 73 and around the bunching dart 43. The piston channel 71 is terminated with an annular sealing plug 75 formed with a central bore 76 for the bunching dart 43. The annular sealing plug 75 forms on the side facing the compression coil spring 48 a first annular valve seat 751 for the sliding seal 74. The annular sealing plug 75 may be inserted into the piston channel 71 after the piston 41 has been inserted.

The piston channel 71 is provided with a through opening (not shown) which provides a fluid channel from the piston channel 71 to the inflatable device 9 seen in figure 1. The inflatable device 9 may be a life vest.

In normal operation the inflatable device 9 is filled with gas from the compressed gas cylinder 5 by engaging the trigger 83. A pull in the handle 82 rotates the trigger 83 around the trigger axis 84. The cam lobe 87, which abuts the engagement head 42, displaces the piston 41. The compression coil spring 48 is compressed between the surface 471 and the seal holder 73, and the bunching dart 43 is forced through the sealing plug 75 and further into the compressed gas cylinder 5 until the compressed gas cylinder 5 is punctured. Gas flows towards the piston channel 71 through the bore 76 and lifts the sliding seal 74 off the first valve seat 751. The seal holder 73 is displaced along the bunching dart 43 together with the sliding seal 74, and the compression coil spring 48 is further compressed. Gas in the piston channel 71 enters the inflatable device 9 through the through opening. The sealing element 72 secures that compressed gas is not released from the piston channel 71. When the force of the compression coil spring 48 on the seal holder 73 exceeds the force of the remaining compressed gas in the compressed gas cylinder 5, the sliding seal 74 closes the passage through the bore 76 by abutting the annular valve seat 751. The compressed gas in the inflatable device 9 is confined as the sliding seal 74 and the sealing element 72 block for passage out through the releaser 4.

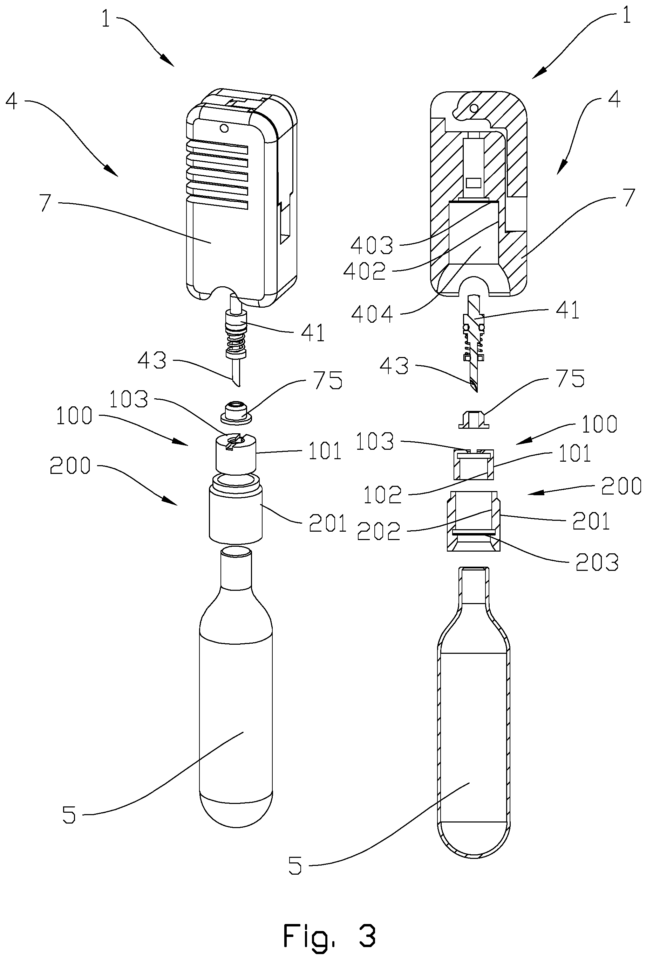

Figure 3 shows in perspective view (left) and cross-sectioned view (right) individual parts of the connection device 1 together with the compressed gas cylinder 5. Apart from the releaser 4, which comprises the releaser house 7, piston 41 with bunching dart 43, and plug 75, the connection device 1 also comprises an inner sleeve 100 and an outer sleeve 200. The inner sleeve 100 comprises left-handed threads on the outside 101 which fits with complementary threads (the threads are not shown in the drawings) on the inside 202 of the outer sleeve 200, and right-handed threads on the inside 102 which fit with complementary threads on the compressed gas cylinder 5. The inner sleeve 100 additionally comprises an end cap 103 which prevents the compressed gas cylinder 5 from being screwed further into the inner sleeve 100 when said compressed gas cylinder 5 meets the end cap 103. The end cap 103 has a central opening which allows for penetration of the bunching dart 43. Similarly, the outer sleeve 200 comprises an inner cap 203 which prevents the inner sleeve 100 from being screwed further into the outer sleeve 200 when said inner sleeve 100 meets the inner cap 203. The inner cap 203 has a larger, central opening which allows the compressed gas cylinder 5 to penetrate the inner cap 203 and enter the inner sleeve 100. The inner sleeve 100 and the compressed gas cylinder 5 should enter the outer sleeve 200 from opposite directions. The outer sleeve 200 comprises right-handed threads on the outside 201 which fits with complementary threads on the inside 402 of an opening 404 in the releaser house 7. The opening 404 of the releaser house 7 has an end surface 403.

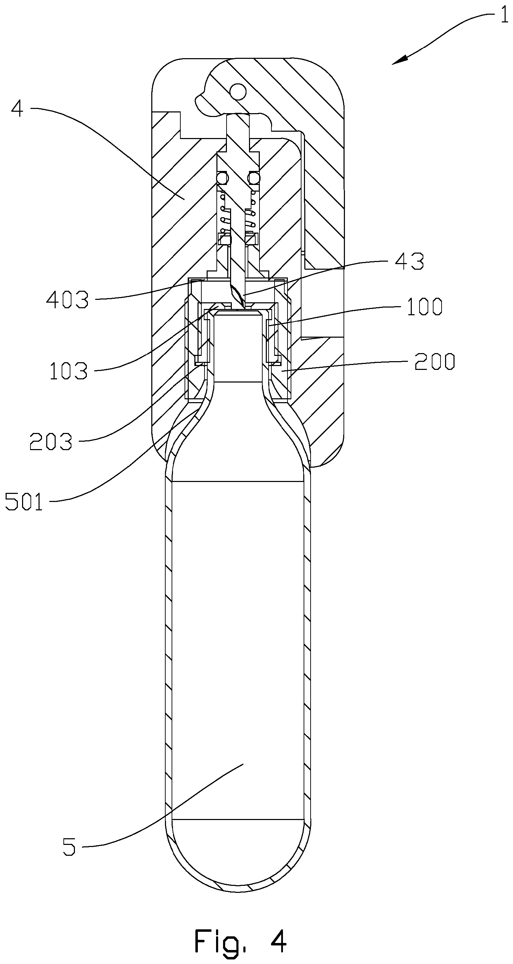

Figure 4 shows a cross-sectioned view of the connection device 1 from figures 1-3 after attachment of the compressed gas cylinder 5. The connection device 1 has been assembled as follows. First, the inner sleeve 100 is screwed into the outer sleeve 200 until it meets the inner cap 203. The threads in this connection are left-handed. Then the compressed gas cylinder 5 is screwed into the inner sleeve 100 until it meets the end cap 103. Since this threaded connection is right-handed there is no risk of loosening the connection between the inner sleeve 100 and outer sleeve 200. Thread-locker may be used on the connection between the inner cap 100 and the gas cylinder 5 to secure a firm connection. Finally, the outer sleeve 200, with the inner sleeve 100 and compressed gas cylinder 5 attached, is screwed into the opening 404 of the releaser house 7 until it meets the end surface 403. Thread-locker may be used on the connection between the outer sleeve 200 and the releaser house 7. The threads on this connection are also right-handed, so turning of the compressed gas cylinder 5 in a clockwise direction results is tightening of the connections between the outer sleeve 200 and the releaser house 7, between the inner sleeve 100 and outer sleeve 200, and between the compressed gas cylinder 5 and the inner sleeve 100. Thus, when the compressed gas cylinder is fastened to the connection device 1, turning of said compressed gas cylinder 5 in an anticlockwise direction will in principle result in loosening of the above-mentioned connections. However, due to the presence of thread-locker of the connections between the compressed gas cylinder 5 and the inner sleeve 100 and between the releaser house 7 and the outer sleeve 200, these connections require much more torque to be loosened than the connection between the inner sleeve 100 and the outer sleeve 200. Turning of the compressed gas cylinder 5 in an anticlockwise direction will therefore initially only result in the inner sleeve 100 being unscrewed from the outer sleeve 200. As the threads in the connection between the inner sleeve 100 and the outer sleeve 200 are left-handed, unscrewing of the inner sleeve 100 from the outer sleeve 200 causes the inner sleeve 10 and attached compressed gas cylinder 5 to be displaced axially towards the bunching dart 43, which will puncture the compressed gas cylinder 5. If the turning of the compressed gas cylinder 5 in an anticlockwise direction is continued, the end cap 103 of the inner sleeve 100 will meet the end surface 403 of the opening 404 of the releaser house 7, or the shoulder 501 of the compressed gas cylinder 5 will meet the outer sleeve 200 or a portion of the releaser housing 7. If enough torque is used, the resistance provided by the thread-locker of either the connection between the compressed gas cylinder 5 and the inner sleeve 100 or between the outer sleeve 200 and the releaser house 7 may be overcome, thereby loosening one of these connections after the compressed gas cylinder 5 has been punctured. Which of these two connections is being loosened can be chosen by using thread-lockers with different strength. In this way the connection with the weakest thread-locker is loosened. If the connection between outer sleeve 200 and the releaser house 7 has the weakest thread-locker, the inner sleeve 100 and outer sleeve 200 will be attached to the compressed gas cylinder 5 when said compressed gas cylinder 5 is separated from the releaser 4. Another compressed gas cylinder 5, inner sleeve 100, and outer sleeve 200 may thereafter be assembled again as described above.

The invention prohibits unauthorized release of the compressed gas cylinder 5 from the inflatable device 9. The inflatable device 9 will be filled with compressed gas without activating the primary activation mechanism. The gasfilled inflatable device 9 will be a clear evidence that somebody has tried to remove the compressed gas cylinder 5.

As mentioned above, the releaser 4 may be irreversibly connected to the inflatable device 9, for example through welding. Alternatively, the releaser 4 and the inflatable device 9 may be reversible connected such that they can be separated, for example using a specific coupling up. This may have the advantage that maintenance of the inflatable device 9 and / or the releaser 4 may be easier. For example, if the inflatable device 9 is ruptured, the compressed gas cylinder 5 and releaser 4 may be changed to another inflatable device 9 without puncture of the compressed gas cylinder 5.

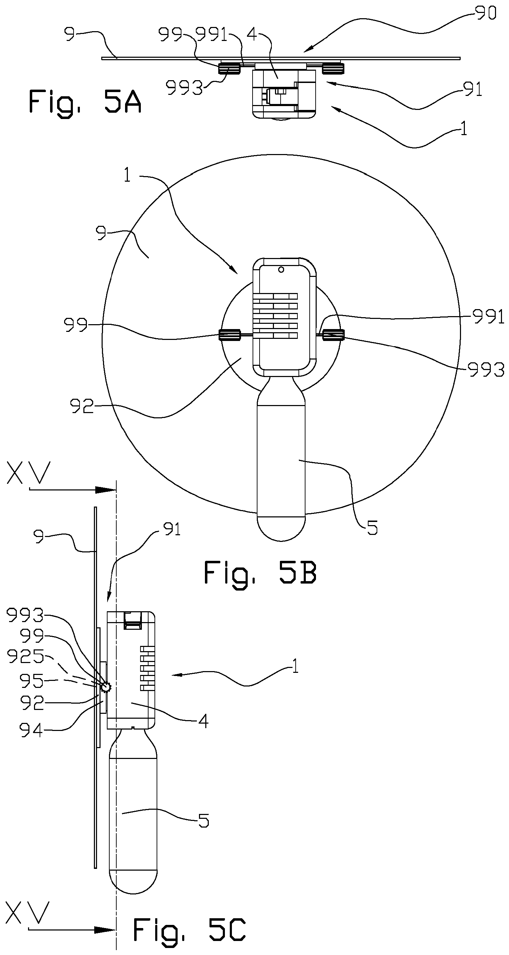

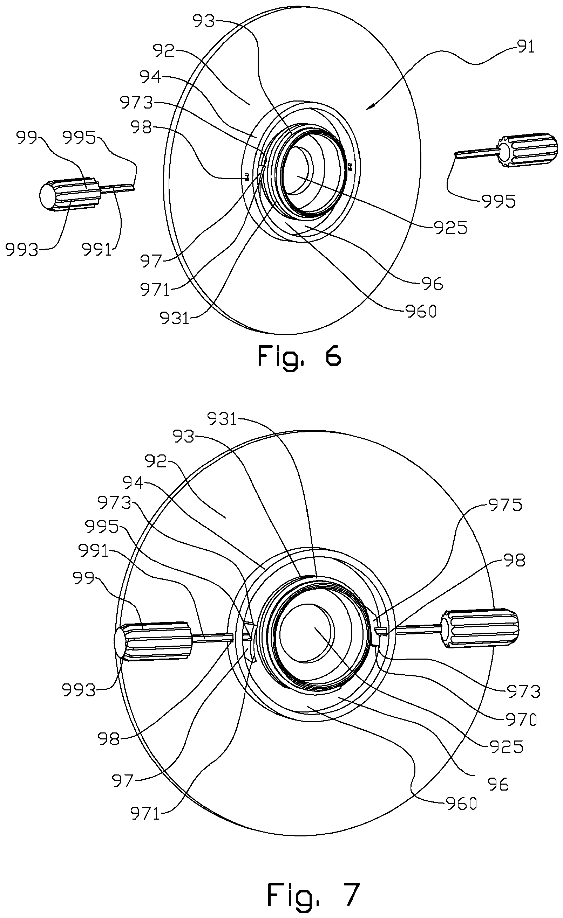

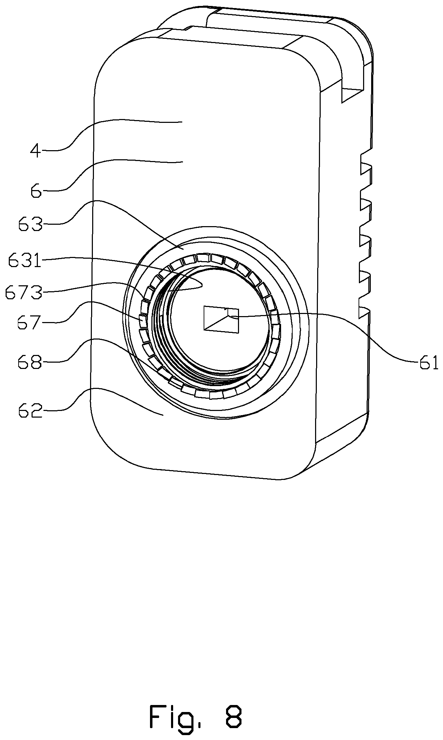

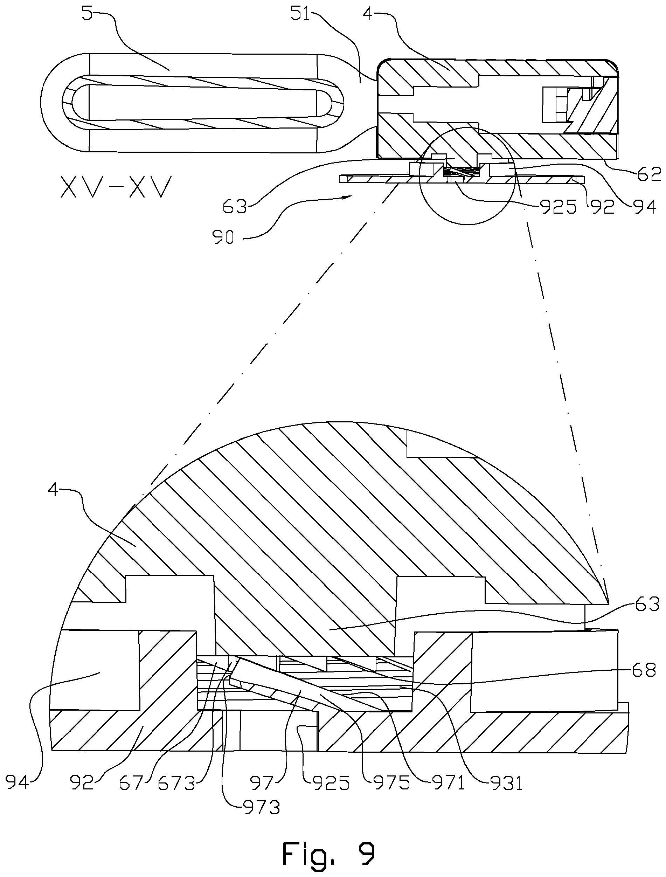

An embodiment of a coupling up 90 of the inflatable device 9 and the releaser 4 is shown in figures 5A-C - 9. The coupling up 90 is designed for authorized separation of the inflatable device 9 from the releaser 4 by use of a release tool 99. The coupling up 90 comprises a flange connection 91 which is fastened to an outer surface of the inflatable device 9 and which surrounds a through opening 95 in the inflatable device 9. The flange connection 91 may be fastened to the inflatable device 9 by a suitable glue. The flange connection 91 comprises a base plate 92 provided with a through opening 925 which is aligned with the through opening 95. An inner cylindrical protrusion 93 and an outer cylindrical protrusion 94 surround the through opening 925. The inner cylindrical protrusion 93 and the outer cylindrical protrusion 94 are positioned coaxially. The inner cylindrical protrusion 93 comprises external threads 931.

The inner cylindrical protrusion 93 and the outer cylindrical protrusion 94 form between them an annulus 96. The base plate 92 is at a bottom face 960 of the annulus 96 provided with at least one spring hinged catch lever 97. The figures show two catch levers 97. When idle or non-tensioned, a portion of the catch lever 97 is raised above the base plate 92 within the annulus 96. The base plate 92 is at the bottom face 960 provided with a recess 970 which is complementary to the catch lever 97. The catch lever 97 comprises a slide surface 971, a first lock surface 973 and a compression surface 975. The slide surface 971 is substantially parallel to the base plate 92. The lock surface 973 is substantially perpendicular to the base plate 92. The compression surface 975 tapers radially towards the base plate 92 from the inner cylindrical protrusion 93 towards the outer cylindrical protrusion 94.

A radially oriented key hole 98 is positioned in the outer cylindrical protrusion 94. The key hole 98 is formed with an opening with an irregular profile. A release tool 99 comprises a stem 991 and a handle 993. The stem 991 is provided with a tapered tip 995. The stem 991 is formed with a profile that matches the profile of the key hole 98.

The attachment device 6 is on a connection face 62 provided with a connection flange 63. The connection flange 63 surrounds the through opening 61. The connection flange 63 is provided with internal threads 631 which mate with the external threads 931. The flange 63 is further provided with ratchets 67. The ratchets 67 are arranged in a circle on the edge of the connection flange 63. Each rachet 67 is provided with a second lock surface 673 which may be oriented perpendicular to the connection face 62. The rachets 67 form a barbed surface 68.

The attachment device 6 is screwed onto the coupling up 90 by mating the internal threads 631 with the external threads 931. The barbed surface 68 with the rachets 67 slide freely over the slide surface 971 at low resistance. The second lock surface 973 engages the first lock surface 673 and the engagement blocks for unscrewing the attachment device 6. The catch lever is in a blocking position. The attachment 6 is screwed onto the coupling 9 until the edge of the inner cylindrical protrusion 93 engages a seal which surrounds the through opening 61.

The attachment device 6 is released from the coupling up 90 by use of the release tool 99. When the stem 991 is displaced radially inwards through the key hole 98, the tapered tip 995 engages the compression surface 975 and further displacement of the stem 991 presses the catch lever 97 towards the recess 970 and further into the recess 970. The catch lever is in a disengaged position. The lock surface 973 is thereby not in engagement with the lock surface 673 and the attachment device 6 may be unscrewed. Only authorized personnel equipped with the release tool 99 may unscrew the attachment device 6.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A connection device (1) for connecting a compressed gas cylinder (5) to an inflatable device (9), wherein the connection device (1) comprises:
- a releaser (4) configured to provide a fluid connection between the compressed gas cylinder (5) and the inflatable device (9), the releaser (4) comprising a releaser house (7) formed with a central piston channel (71) and an activation mechanism comprising a piston (41) provided with a bunching dart (43) for controlled puncture of the compressed gas cylinder (5), said activation mechanism being provided with means for axially displacement of the piston (41) in the piston channel (71) to-wards the compressed gas cylinder (5);
- an outer sleeve (200) comprising threads with a first handedness on an outside (201) of the outer sleeve (200) which fits complementary threads on an inside (402) of an opening (404) in the releaser house (7) whereby the outer sleeve (200) is configured for being fastened into the releaser (4) by turning in a first direction relative to the releaser (4); and
- an inner sleeve (100) comprising threads with a second handedness on an outside (101) of the inner sleeve (100) which fits with complementary threads on an inside (202) of the outer sleeve (200), and threads with the first handedness on an inside (102) of the inner sleeve (100) which are configured to fit with complementary threads on the compressed gas cylinder (5), whereby the inner sleeve (100) is configured for being fastened into the outer sleeve (200) by turning the inner sleeve (100) in a second direction relative to the outer sleeve (200), and for the compressed gas cylinder (5) to be fastened, in use, into said inner sleeve (100) by rotation of the compressed gas cylinder (5) in the first direction relative to the inner sleeve (100),
**characterised in that** the second handedness is opposite the first handedness,
**in that** the second direction is opposite to the first direction, and
**in that** the connection device (1) further comprises thread-locker on the threads between the compressed gas cylinder (5), in use, and the inner sleeve (100) and between the outer sleeve (200) and the opening (404) of the releaser house (7), or **in that** the threads between the inner (100) and outer (200) sleeve have a larger pitch than between the outer sleeve (200) and the opening (404) of the releaser house (7), whereby the connection device (1) is configured such that, when the compressed gas cylinder (5) is fastened to the connection device (1), turning of the compressed gas cylinder (5) in the second direction relative to the releaser (4) will result in axial displacement of the compressed gas cylinder (5) towards the bunching dart (43).

2. The connection device (1) according to claim 1, wherein the connection device (1) comprises an attachment device (6) for fastening the releaser (4) to the inflatable device (9), wherein the attachment device (6) comprises a screw type coupling up (90) for connecting to the inflatable device (9), said coupling up (90) comprises a spring hinged catch lever (97) provided with a first lock surface (973) and a number of rachets (67), and each of the rachets (67) is provided with a second lock surface (673), said second lock surface (673) is adapted for engagement with the first lock surface (973), and the spring hinged catch lever (97) is provided with a compression surface (975) which is adapted to engage with a tapered tip (995) of a tool (99) such that the first lock surface (973) is released from the second lock surface (673).

## Patentansprüche

1. Verbindungsvorrichtung (1) zum Verbinden eines Druckgaszylinders (5) mit einer aufblasbaren Vorrichtung (9), wobei die Verbindungsvorrichtung (1) aufweist:
- einen Auslöser (4), welcher ausgebildet ist, eine Fliessverbindung zwischen dem Druckgaszylinder (5) und der aufblasbaren Vorrichtung (9) herzustellen, wobei der Auslöser (4) ein Auslösergehäuse (7) aufweist, welches mit einem zentralen Kolbenkanal (71) ausgebildet ist, und einen Aktivierungsmechanismus aufweist, welcher einen Kolben (41) aufweist, der einen Bündelungsstift (43) aufweist, zum kontrollierten Durchstechen des Druckgaszylinders (5), wobei der besagte Aktivierungsmechanismus Mittel zur axialen Verschiebung des Kolbens (41) im Kolbenkanal (71) in Richtung des Druckgaszylinders (5) aufweist;
- eine Aussenhülle (200), aufweisend Gewinde mit einer ersten Ausrichtung an einer Aussenseite (201) der Aussenhülle (200), welche mit komplementären Gewinden an einer Innenseite (402) einer Öffnung (404) im Auslösergehäuse (7) zusammen passt, wodurch die Aussenhülle (200) ausgebildet ist, um in den Auslöser (4) hinein befestigt zu werden, durch Drehung in eine erste Richtung in Bezug auf den Auslöser (4); und
- eine Innenhülle (100), aufweisend Gewinde mit einer zweiten Ausrichtung an einer Aussenseite (101) der Innenhülle (100), welche mit komplementären Gewinde an einer Innenseite (202) der Aussenhülle (200) zusammen passt, und Gewinde mit der ersten Ausrichtung an einer Innenseite (102) der Innenhülle (100), welche ausgebildet sind, sodass sie mit komplementären Gewinden auf dem Druckgaszylinder (5) zusammen passen, wodurch die Innenhülle (100) ausgebildet ist, um in die Aussenhülle (200) hinein befestigt zu werden durch Drehung der Innenhülle (100) in eine zweite Richtung in Bezug auf die Aussenhülle (200), und um den Druckgaszylinder (5), während des Betriebs, in die besagte Innenhülle (100) hinein zu befestigen, durch Drehung des Druckgaszylinders (5) in die erste Richtung in Bezug auf die Innenhülle (100),
**dadurch gekennzeichnet, dass**
die zweite Ausrichtung entgegengesetzt zur ersten Ausrichtung ist, dass die zweite Richtung entgegengesetzt zur ersten Richtung ist, und dass die Verbindungsvorrichtung (1) ferner einen Gewindeblockierer auf den Gewinden zwischen dem im Betrieb stehenden Druckgaszylinder (5) und der Innenhülle (100) aufweist, und zwischen der Aussenhülle (200) und der Öffnung (404) des Auslösergehäuses (7), oder dass
die Gewinde zwischen der Innenhülle (100) und der Aussenhülle (200) grössere Zwischenräume aufweisen als zwischen der Aussenhülle (200) und der Öffnung (404) des Auslösergehäuses (7), wodurch die Verbindungsvorrichtung (1) derart ausgebildet ist, dass wenn der Druckgaszylinder (5) an der Verbindungsvorrichtung (1) befestigt ist, ein Drehen des Druckgaszylinders (5) in die zweite Richtung in Bezug auf den Auslöser (4) eine axiale Verschiebung des Druckgaszylinders (5) zum Bündelungsstift (43) hin bewirkt.

2. Verbindungsvorrichtung (1) gemäss Anspruch 1, wobei die Verbindungsvorrichtung (1) eine Befestigungsvorrichtung (6) zur Befestigung des Auslösers (4) an der aufblasbaren Vorrichtung (9) aufweist, wobei die Befestigungsvorrichtung (6) eine schraubenartige Kopplung (90) zur Verbindung mit der aufblasbaren Vorrichtung (9) aufweist, wobei die besagte Kopplung (90) einen Federband-Rasthebel (97) aufweist, welcher eine erste Verriegelungsfläche (973) und eine Vielzahl von Klinken (67) aufweist, und wobei jede der Klinken (67) eine zweite Verriegelungsfläche (673) aufweist, wobei die besagte zweite Verriegelungsfläche (673) ausgebildet ist, um mit der ersten Verriegelungsfläche (973) im Eingriff zu stehen, und wobei der Federband-Rasthebel (97) mit einer Druckfläche (975) ausgebildet ist, welche angepasst ist, mit einer kegelförmigen Spitze (995) eines Werkzeugs (99) im Eingriff zu stehen, sodass die erste Verriegelungsfläche (973) von der zweiten Verriegelungsfläche (673) gelöst wird.

## Revendications

1. Un dispositif de connexion (1) pour connecter une bouteille de gaz comprimé (5) à un dispositif gonflable (9), dans lequel le dispositif de connexion (1) comprend:
- un déclencheur (4) configuré pour fournir une connexion fluidique entre la bouteille de gaz comprimé (5) et le dispositif gonflable (9), le déclencheur (4) comprenant un boitier de déclencheur (7) réalisé avec un canal de piston central (71) et un mécanisme d'activation comprenant un piston (41) muni d'une fléchette de poinçonnage (43) pour la perforation contrôlée de la bouteille de gaz comprimé (5),
ledit mécanisme d'activation étant muni de moyens pour un déplacement axial du piston (41) dans le canal de piston central (71) vers la bouteille de gaz comprimé (5),
- un manchon extérieur (200) comprenant des filetages ayant un premier sens du filetage sur un extérieur (201) du manchon extérieur (200) qui s'engagent avec des filetages complémentaires sur un intérieur (402) d'une ouverture (404) dans le boitier de déclencheur (7) selon quoi le manchon extérieur (200) est configuré pour être fixé dans le déclencheur (4) en tournant dans un premier sens par rapport au déclencheur (4) ; et
- un manchon intérieur (100) comprenant des filetages ayant un deuxième sens du filetage sur un extérieur (101) du manchon intérieur (100) qui s'engagent avec des filetages complémentaires sur un intérieur (102) du manchon extérieur (200), et les filetages avec le premier sens du filetage sur un intérieur (102) du manchon intérieur (100) qui sont configurés pour s'engager avec les filetages complémentaires sur la bouteille de gaz comprimé (5), selon quoi le manchon intérieur (100) est configuré pour être fixé dans le manchon extérieur (200) en tournant le manchon intérieur (100) dans un second sens par rapport au manchon extérieur (200) et pour que la bouteille de gaz comprimé (5) soit fixée, lors de l'utilisation, dans ledit manchon intérieur (100) par rotation de la bouteille de gaz comprimé (5) dans le premier sens par rapport au manchon intérieur (100),
**caractérisé en ce que** deuxième sens du filetage est opposé à la premier sens du filetage, et **en ce que** le deuxième sens est opposé au premier sens, et **en ce que** le dispositif de connexion (1) comprend en outre un verrou de filetage sur les filetages entre la bouteille de gaz comprimé (5), lors de l'utilisation, et le manchon intérieur (100) et entre le manchon extérieur (200) et l'ouverture (404) du boitier de déclencheur (7), ou **en ce que** les filetages entre le manchon intérieur (100) et extérieur (200) ont un pas de vis supérieur que entre le manchon extérieur (200) et l'ouverture (404) du boitier de déclencheur (7), dans lequel le dispositif de connexion (1) est configuré de telle sorte que, lorsque la bouteille de gaz comprimé (5) est fixée sur le dispositif de connexion (1), la rotation de la bouteille de gaz comprimé (5) dans la deuxième direction par rapport au déclencheur (4) entraînera un déplacement axial de la bouteille de gaz comprimé (5) vers la flèche de poinçonnage (43).

2. Le dispositif de connexion (1) selon la revendication 1, dans lequel le dispositif de connexion (1) comprend un dispositif de fixation (6) pour fixer le déclencheur (4) au dispositif gonflable (9), dans lequel le dispositif de fixation (6) comprend un accouplement à vis (90) pour connecter le dispositif gonflable (9), ledit accouplement (90) comprend un levier d'arrêt articulé à ressort (97) pourvu d'une première surface de verrouillage (973) et d'un certain nombre de cliquets (67), et chacun des cliquets (67) est pourvu d'une seconde surface de verrouillage (673), ladite seconde surface de verrouillage (673) est adaptée pour s'engager avec la première surface de verrouillage (973), et le levier d'arrêt articulé à ressort (97) est pourvu de une surface de compression (975) qui est adaptée pour s'engager avec une pointe effilée (995) d'un outil (99) de telle sorte que la première surface de verrouillage (973) est libérée de la seconde surface de verrouillage (673).
